# EUROPEAN PATENT SPECIFICATION

(11) **EP 1 824 748 B1**
(45) Date of publication and mention of the grant of the patent: **22.07.2015**
(21) Application number: 05801019.0
(22) Date of filing: 14.10.2005
(51) Int. Cl.: B65D 21/04, B65D 45/16, A22C 17/00, B65D 19/42, B65D 43/02, B65D 45/30

(54) **CONTAINER, LID AND CLIP THEREFOR**
BEHÄLTER, DECKEL UND KLEMME DAFÜR
CONTENANT, COUVERCLE ET AGRAFE

(30) Priority: 15.10.2004 NZ 53601104
(43) Date of publication of application: 29.08.2007
(60) Divisional application: 11169003.8
(73) Proprietor: Foodcap International Limited, Auckland Central 1011 (NZ)
(72) Inventor: PALMER, Roger Keith, Katikati (NZ)
(74) Representative: Hallybone, Huw George
(86) International application number: PCT/NZ2005/000268
(87) International publication number: WO 2006/041321

(56) References cited:
- EP-A- 0 330 473
- EP-A1- 0 834 455
- WO-A1-02/059007
- FR-A- 2 118 881
- GB-A- 371 907
- GB-A- 1 203 403
- JP-A- 08 107 616
- JP-A- 09 193 936
- US-A- 5 201 437
- US-A- 5 222 619
- US-A- 5 670 195
- US-S1- D 444 690

## Description

### Field of the Invention

This invention relates to containers for storage, treatment or transportation of perishable food products. The invention has a particular application In the storage, treatment or transportation of meat.

### Background

Containers for meat storage, treatment or transportation are described In US patents 5670195 and 6194012. Securely affixing a lid on to containers of this type is advantageous to ensure that the container is effectively sealed, as a fluid tight seal Is important to maintaining a desired atmosphere for the products within the container.

The Integrity of the container seal, or at least the attachment of the lid to the container is important also for hygiene reasons and to prevent contamination of the container contents.

Containers of this type may hold significant quantities of product which can be very heavy (for example 150 kg), so it is desirable that the container can be easily and securely handled by lifting apparatus. It also follows that the container needs to have significant structural integrity.

European publication no. EP 0330473 discloses a container made up of a box and a dished lid. Means are provided to enable the lid to be placed on the box one way up or the other way up to give two different internal volumes of a container.

UK patent publication no. 1203403 discloses a set of boxes comprising a number of stackable boxes of different sizes which are rectangular in plan view, the length of each box of one size being equal to the width of the next larger box, and the bottoms and the tops of the boxes being so matched that one box can be transversely stacked on the larger box.

UK patent publication no. 371907 discloses a metal cask, barrel or container for holding or containing large quantities of materials for transport, in which the lid, which normally closes the whole mouth of the container, is practically of the same diameter as it, and is removable.

French patent publication no. 2118881 discloses a device of locking provided with a fold arranged at least partially around the opening, and with lids provided with legs arranged in the edge of the lid, the fold of the container and at least a portion of these legs being elastic and the outer end of each folded leg being able to be around the fold and depressed in existing space between the inner face of the fold and the wall of the container, in order to be maintained in the position of locking by an elastic force and pressure on the aforementioned wall, characterized in that one or more of the legs are connected, on their outer edge and by means of a portion of folding back which is thinner than the remainder of the leg, with one leg-extension additionally being used as gripper and optionally provided with an opening.

US design patent publication no. D444690 discloses an ornamental design for a crowbar.

International publication no. WO02/059007 discloses a container (10) and sealable cover (32) in which the container (10) has a bottom wall (12) and an upstanding peripheral wall (16, 18) terminating in an upper edge (22) surrounding an open mouth.

European patent publication EP10834455 discloses a clip closure provided by an H-shaped moulded strap with pairs of hooked clip arms on either side of a central section, engaging the edge of the container and the edge of the container lid respectively.

United States patent US5670195 discloses a container having a base and four side walls dependent therefrom, a mouth a substantially the opposite end of the container from the base and a rib, remote from the base and mouth, which forms a buffer to enable one container to rest one against another

### Summary of the Invention

It is an object of the present mentioned to provide an improved container for the storage, treatment or transportation of perishable food products.

In the alternative is an object of the invention to provide improved apparatus or methods for affixing or detaching a lid to or from such a container.

As another alternative, it is an object of the present invention to at least provide the public with a useful alternative.

Accordingly the invention consists in a system for storage, treatment or distribution of meat comprising, a container (1) having: a base (2) and four side walls (4) dependent therefrom; a mouth at a substantially opposite end of the container (1) from the base; and an external rib (5) dependent from the side walls, the external rib (5) being substantially continuous about the walls (4); wherein the rib (5) substantially comprises a flange that extends outwardly from the walls (4) and toward the base (2) such that a cavity (20) is provided between the flange and the walls and characterized in that it is provided remote from the base (2) and the mouth; a lid (6) for the container; and a plurality of lid securing clips (32) engageable with the lid(6) and a rim (44) of the container (1), whereby the clips (32) secure the lid (6) on the container (1); and a clip removal tool (50, 52, 54) for removal of the plurality of lid securing clips (32) the tool (50, 52, 54) comprising: a body having a handle and a plurality of clip engaging members (52) disposed at an angle to the handle (50), wherein location of the clip engaging members (52) each under a respective end of the plurality of lid securing clips (32) and location of a base of each clip engaging member (52) on a surface of the container (11) allow the handle to be rotated toward the base (2) of the container (1) to disengage the plurality of lid securing clips (32) simultaneously from the container using the clip removal tool.

Preferably, the rib (5) comprises a first flange part (12) that extends from the walls (4) and a second flange part (14) that extends toward the base. Preferably, the first flange part (12) extends substantially perpendicular to the walls (4), and the second flange part (14) extends substantially parallel to the walls (4). Preferably, the rib (5) is a unitary item affixed to the walls (4) of the container. Preferably, the rib (5) includes a plurality of support webs provided between the rib (5) and the walls (4).

Preferably, the height of the container (1) is greater than a width of the container (1).

Preferably, the walls (4) between the rib (5) and the base (2) are tapered to allow the container (1) to be nested with a like container (1).

Preferably, the rim (44) is provided adjacent to, or comprises a part of, a mouth of the container (1).

Preferably, each of the plurality of clips (32) comprises a body (34), one end of the body (34) having two substantially parallel legs (36, 38) dependent therefrom, a projection (42) being provided on one of the legs (38) to engage with the lid (6), the other end of the body (34) having a projection (40) to engage with the rim.

### Drawing Description

One or more embodiments of the invention will be described with reference to the accompanying drawings in which:
Figure 1 is a perspective view of a container,
Figure 2 is a plan view from below of the container of Figure 1.
Figure 3 is an end elevation of the container of the preceding Figures,
Figure 4 is a side elevation of the container of the preceding Figures,
Figure 5 is a side elevation in cross-section of the container of the preceding Figures,
Figure 6 is an expanded view of detail A of Figure 5,
Figure 7 is a plan view of a lid of the container of the preceding Figures,
Figure 8 is a cross-section through the iid as affixed to a mouth or rim of the container of the preceding Figures taken through line B-B of Figure 7, and
Figure 9 is a diagrammatic perspective view of a clip disengagement tool.

### Detailed Description

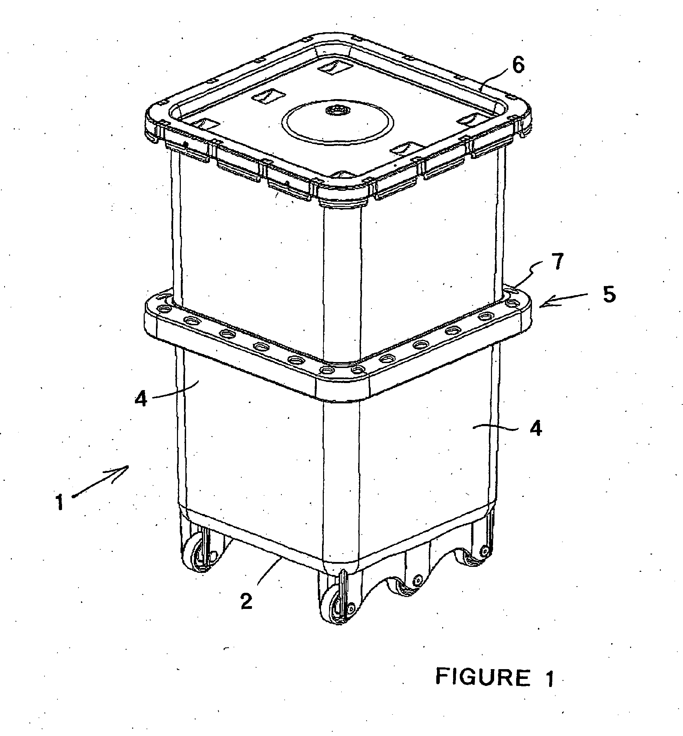

Referring to Figure 1, a container for storage, treatment or transportation of a perishable product such as meat for example is shown, generally referenced 1. The container includes a base 2 and at least one sidewall, but preferably from side walls 4. The side walls preferably taper slightly outwardly from the base toward a mouth of the container (which is obscured in this view by the lid 6) to allow the container to the stacked within a like container.

A rib 5 is provided externally about the walls 4. As can be seen, the rib 5 is provided remote from both the base and the mouth of the container, and in a preferred embodiment is provided substantial midway between the base and the mouth of the container as shown in Figure 1. The rib 5 may contain a number of apertures 7 to facilitate air movement about the container; allow rapid drainage of any liquid about the container (for example when the container is washed or sterilised), and reduce material usage and weight. We have found that Acetal has desirable properties for manufacture of the container, being sufficiently strong and robust and also preventing any movement of gases through the container walls. This material is also food safe.

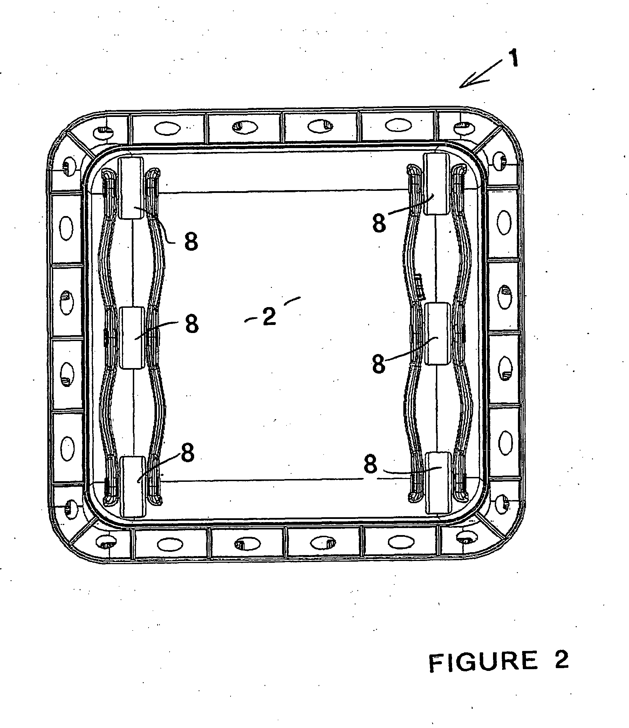

Turning to Figure 2, the base of the container can be seen, having wheels 8 which allow the container to be transported across a surface such as a production facility or through an aisle of a retail store.

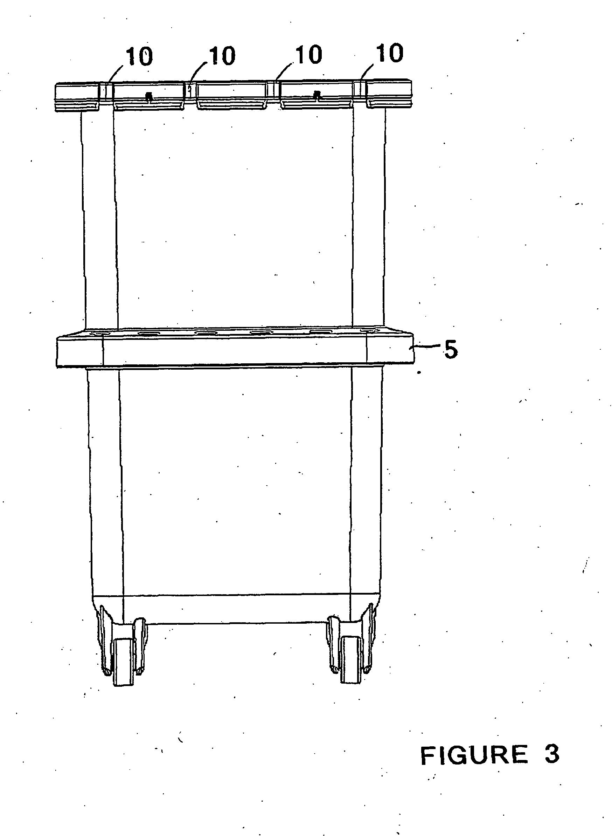

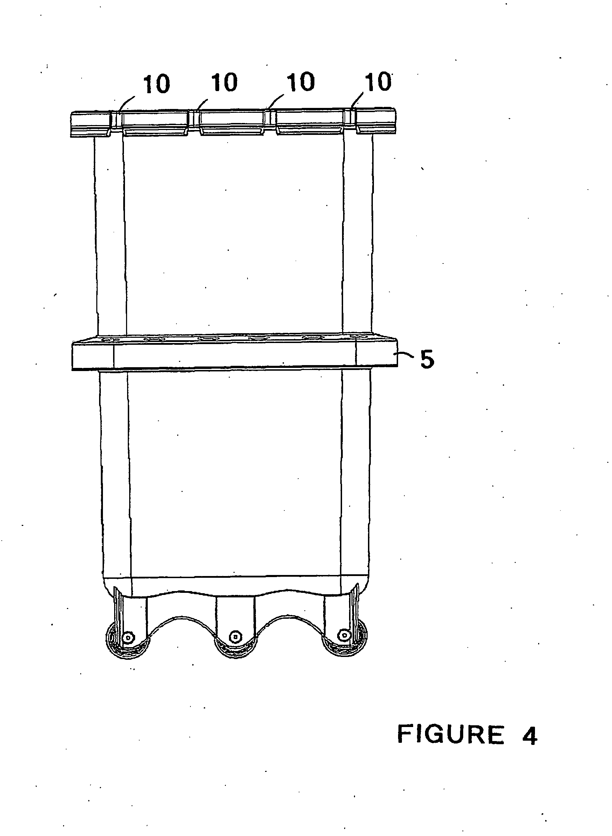

The container is shown in end elevation in Figure 3 and in side elevation in Figure 4, both views showing the rib 5. In these Figures recesses 10 in the periphery of the lid 6 are also clearly visible.

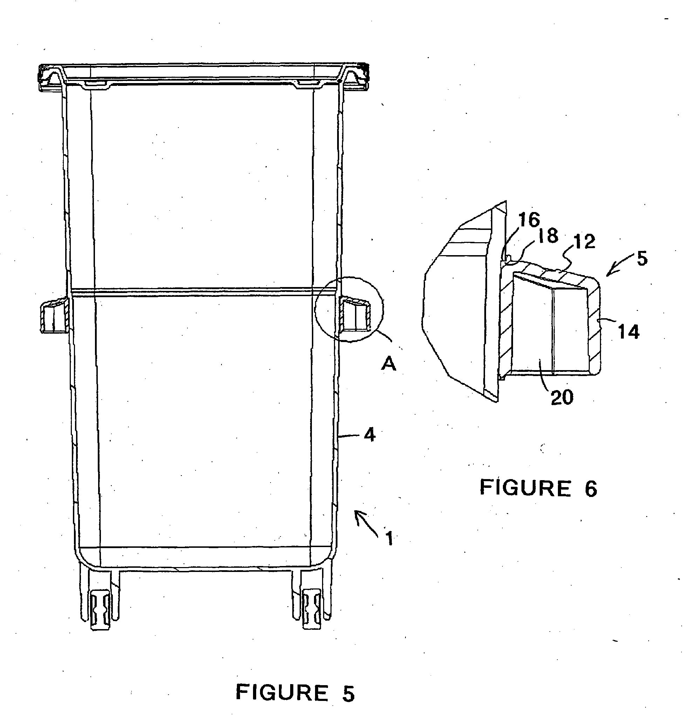

Turning to Figures 5 and 6, the rib 5 can be viewed in greater detail. As can be seen, the rib comprises a generally outwardly projecting flange portion 12 and a downwardly projecting flange portion 14. Although these portions of shown as being generally planar in the drawings, those skilled in the art will appreciate that the rib could be substantially curved. Flange portion 12 projects roughly perpendicularly outwards from the walls 4, and flange portion 12 is directed in a generally parallel direction to the walls 4. The flange 5 may be provided in a variety of different ways, but in the preferred embodiment of flange is constructed as a unitary item which is affixed to the container walls after the container walls have been formed. A shoulder 16 is preferably provided in the walls 4 and a corresponding shoulder 18 is provided on the flange. The flange can then be moved upwardly from the base of the container into abutment as shown in Figure 6 and may be glued or welded to affix it in place.

The rib 5 provides a number of practical advantages. Firstly, it provides additional strength to the overall container structure. It also limits the extent to which one container may be nested into another container. Therefore, the containers may be easily nested and de-nested. The rib provides a space between containers when containers are provided adjacent to each other. In practice this has the advantage that air may flow between the walls of adjacent containers which is beneficial when the contents of the containers needs to be kept at a required temperature, for example when placed in a cool store or chiller. Also, the rib defines a cavity 20 within which lifting or manoeuvring apparatus (in particular automated lifting or manoeuvring apparatus) may be disposed to engage the container with a lifting or transport mechanism to thereby buy facilitate safe transportation, lifting or other movement of the container.

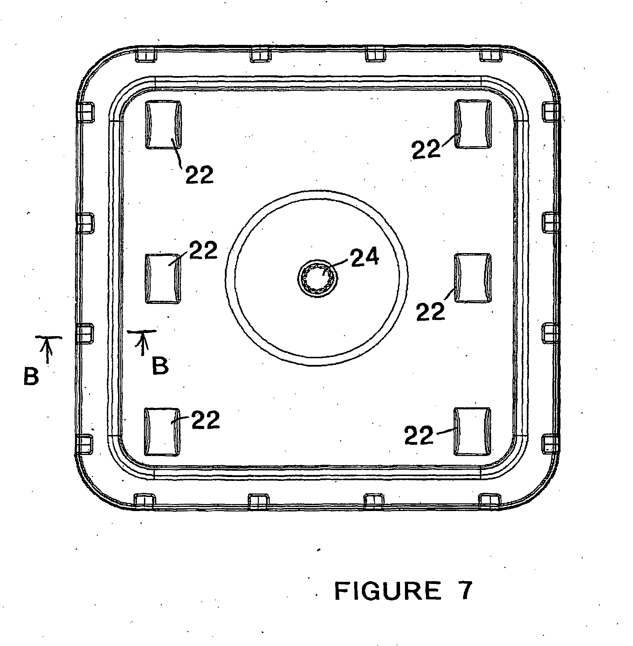

In Figure 7 the lid 6 is shown in plan view. As can be seen, the lid has a number of depressions 22 which are adapted to support wheels 8 of another container and thereby facilitate stacking of containers one above the other.

A valve 24 is also shown in Figure 7. This may be used to introduce a desired atmosphere into the container, for example flush the interior of the container with a gas or mixture of gases such as carbon dioxide.

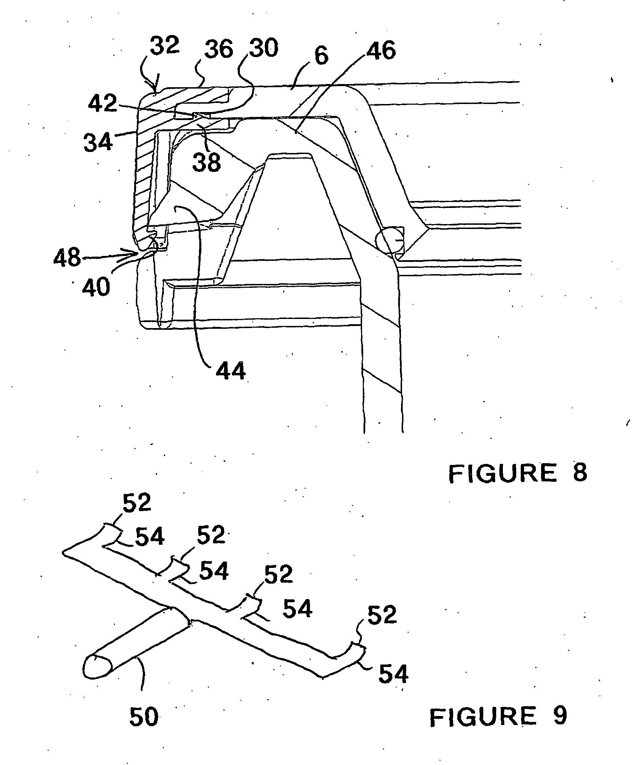

Turning to Figure 8, a clipping mechanism is shown in cross-section. A peripheral portion of the lid 6 has a groove or recess 30. A clip 32 has a body 34 which has two legs 36 and 38 dependent from one end thereof. The other end of body 34 has a projection 40. Leg 38 has a projection 42 which extends into recess 30. Therefore, the legs 36 and 38 secure the clip to the lid 6. A rim 44 provided about the mouth 46 of the container projects so as to engage with projection 40 of the clip, preventing the clip from being moved in an upward direction to remove the lid 6 from the container.

As can be seen from the drawings, a number of clips 34 are provided. To use the clips to secure the lid to the container, the user simply engages the clips with the lid by pressing the clips onto the lid so that the legs 36 and 38 slide over the appropriate peripheral section of the lid to allow projection 42 to engage with recess 30. Then, the lid is placed over the container, causing projection 40 to slide over the projecting rim 44.

The projection 40 is located very close to the rim of the container, making it very difficult for user to insert a finger for example into the space indicated by arrow 48 to prise the clip away from the container. However, an appropriate tool may be used to disengage the clip. Such a tool is shown diagrammatically in Figure 9. Referring to that Figure, the tool has a handle 50, dependent from which are a series of curved or angled projections 52. In practice, the tips of the projections 52 may be placed within the space indicated by arrow 48 in Figure 8, and the tool may be then rotated on a downward direction so that regions 54 act as a fulcrum which engages with the rim of the container, thereby allowing the user to prise the clips away from the rim of the container which in turn allows the lid to be removed.

Those skilled in the art to which the invention relates will see that a plurality of tools such as those shown in figure 9 may be arranged, one about each side of the container, in an automated fashion so that the clips can be prised away simultaneously, so that the lid can be removed in one single operation.

The lid clipping mechanism described above allows the container to be sealed in a fluid tight manner, and also provides increased structural rigidity or integrity to the container.

## Claims

1. System comprising an apparatus for storage, treatment or distribution of meat and a clip removal tool (50, 52, 54), the apparatus comprising;
a container (1) having:
a base (2) and four side walls (4) dependent therefrom;
a mouth at a substantially opposite end of the container (1) from the base; and
an external rib (5) dependent from the side walls, the external rib (5) being substantially continuous about the walls (4);
wherein the rib (5) substantially comprises a flange that extends outwardly from the walls (4) and toward the base (2) such that a cavity (20) is provided between the flange and the walls and **characterized in that** it is provided remote from the base (2) and the mouth;
a lid (6) for the container; and
a plurality of lid securing clips (32) engageable with the lid(6) and a rim (44) of the container (1), whereby the clips (32) secure the lid (6) on the container (1); and
the clip removal tool (50, 52, 54) for removal of the plurality of lid securing clips (32) the tool (50, 52, 54) comprising:
a body having a handle and a plurality of clip engaging members (52) disposed at an angle to the handle (50),
wherein location of the clip engaging members (52) each under a respective end of the plurality of lid securing clips (32) and location of a base of each clip engaging member (52) on a surface of the container (11) allow the handle to be rotated toward the base (2) of the container (1) to disengage the plurality of lid securing clips (32) simultaneously from the container using the clip removal tool.

2. System as claimed in claim 1 wherein the rib (5) comprises a first flange part (12) that extends from the walls (4) and a second flange part (14) that extends toward the base.

3. System as claimed in claim 2 wherein the first flange part (12) extends substantially perpendicular to the walls (4), and the second flange part (14) extends substantially parallel to the walls (4).

4. System as claimed in any one of the preceding claims wherein the height of the container (1) is greater than a width of the container (1).

5. System as claimed in any one of the preceding claims wherein the rib (5) is a unitary item affixed to the walls (4) of the container.

6. System as claimed in any one of the preceding claims wherein the walls (4) between the rib (5) and the base (2) are tapered to allow the container (1) to be nested with a like container (1).

7. System as claimed in any one of the preceding claims wherein the rib (5) includes a plurality of support webs provided between the rib (5) and the walls (4).

8. System as claimed in any one of claims 1 to 7 wherein the rim (44) is provided adjacent to, or comprises a part of, a mouth of the container (1).

9. System as claimed in any one of claims 1 to 8 wherein each of the plurality of clips (32) comprises a body (34), one end of the body (34) having two substantially parallel legs (36, 38) dependent therefrom, a projection (42) being provided on one of the legs (38) to engage with the lid (6), the other end of the body (34) having a projection (40) to engage with the rim.

## Patentansprüche

1. System, umfassend eine Vorrichtung zum Speichern, Behandeln oder Verteilen von Fleisch und ein Klammerentfernungswerkzeug (50, 52, 54), wobei die Vorrichtung umfasst:
einen Behälter (1) mit:
einer Basis (2) und vier davon abhängigen Seitenwänden (4);
eine Öffnung an einem im Wesentlichen gegenüberliegenden Ende der Basis des Behälters (1); und eine von den Seitenwänden abhängige externe Rippe (5), wobei die externe Rippe (5) im Wesentlichen durchgehend über die Wände (4) verläuft;
wobei die Rippe (5) im Wesentlichen einen Flansch umfasst, der sich von den Wänden (4) nach außen und zur Basis (2) erstreckt, sodass ein Hohlraum (20) zwischen dem Flansch und den Wänden bereitgestellt wird und **dadurch gekennzeichnet, dass** dieser entfernt von der Basis (2) und der Öffnung bereitgestellt wird;
einen Deckel (6) für den Behälter; und
mehrere Deckelsicherungsklammern (32), die mit dem Deckel (6) und einem Rand (44) des Behälters (1) in Eingriff gebracht werden können, wobei die Klammern (32) den Deckel (6) auf dem Behälter (1) sichern; und
ein Klammerentfernungswerkzeug (50, 52, 54) zum Entfernen der mehreren Deckelsicherungsklammern (32), wobei das Werkzeug (50, 52, 54) umfasst:
einen Körper mit einem Griff und mehreren Klammereingriffselementen (52), die in einem Winkel zu dem Griff (50) angeordnet sind,
wobei sich die Klammereingriffselemente (52) jeweils unter einem zugehörigen Ende der mehreren Deckelsicherungsklammern (32) befinden und sich eine Basis jedes Klammereingriffselements (52) auf einer Oberfläche des Behälters (11) befindet und ermöglicht, dass der Griff zu der Basis (2) des Behälters (1) gedreht werden kann, um die mehreren Deckelsicherungsklammern (32) mithilfe des Klammerentfernungswerkzeugs gleichzeitig von dem Behälter außer Eingriff zu bringen.

2. System nach Anspruch 1, wobei die Rippe (5) ein erstes Flanschteil (12) umfasst, das sich von den Wänden (4) erstreckt, und ein zweites Flanschteil (14), das sich zu der Basis erstreckt.

3. System nach Anspruch 2, wobei sich das erste Flanschteil (12) im Wesentlichen senkrecht zu den Wänden (4) erstreckt, und sich das zweite Flanschteil (14) im Wesentlichen parallel zu den Wänden (4) erstreckt.

4. System nach einem der vorhergehenden Ansprüche, wobei die Höhe des Behälters (1) größer als eine Breite des Behälters (1) ist.

5. System nach einem der vorhergehenden Ansprüche, wobei die Rippe (5) ein einheitliches Element ist, das an den Wänden (4) des Behälters befestigt ist.

6. System nach einem der vorhergehenden Ansprüche, wobei die Wände (4) zwischen der Rippe (5) und der Basis (2) abgeschrägt sind, damit der Behälter (1) mit einem ähnlichen Behälter (1) verschachtelt werden kann.

7. System nach einem der vorhergehenden Ansprüche, wobei die Rippe (5) mehrere Abstützgewebe aufweist, die zwischen der Rippe (5) und den Wänden (4) bereitgestellt sind.

8. System nach einem der Ansprüche 1 bis 7, wobei der Rand (44) benachbart zu der Öffnung des Behälters (1) bereitgestellt ist oder einen Teil davon umfasst.

9. System nach einem der Ansprüche 1 bis 8, wobei jede der mehreren Klammern (32) einen Körper (34) umfasst, wobei ein Ende des Körpers (34) zwei im Wesentlichen davon abhängige parallele Schenkel (36, 38) aufweist, wobei ein Vorsprung (42) an einem der Schenkel (38) bereitgestellt ist, um mit dem Deckel (6) in Eingriff gebracht zu werden, wobei das andere Ende des Körpers (34) einen Vorsprung (40) aufweist, um mit dem Rand in Eingriff gebracht zu werden.

## Revendications

1. Système comprenant un dispositif pour le stockage, le traitement ou la distribution de viande et un outil de retrait d'attache (50, 52, 54), le dispositif comprenant :
un récipient (1) comportant :
une base (2) et quatre parois latérales (4) reliées à celle-ci ;
une bouche à une extrémité substantiellement opposée du récipient (1) par rapport à la base (2) ; et
une nervure extérieure (5) dépendante des parois latérales, la nervure extérieure étant substantiellement continue autour des parois (4) ;
dans lequel la nervure (5) comprend substantiellement un rebord s'étendant vers l'extérieur des parois (4) et vers la base (2), de manière à créer une cavité (20) entre le rebord et les parois, et **caractérisé en ce qu'**il est prévu à distance de la base (2) et de la bouche ;
un couvercle (6) pour le récipient ; et
une pluralité d'attaches de fixation de couvercle (32) aptes à être engagées avec le couvercle (6) et avec un bord (44) du récipient (1), les attaches (32) fixant le couvercle (6) sur le récipient (1) ; et
l'outil de retrait d'attache (50, 52, 54) permettant de retirer la pluralité d'attaches de fixation de couvercle (32), l'outil (50, 52, 54) comprenant :
un corps présentant une poignée et une pluralité d'éléments d'engagement d'attaches (52) disposés de manière à former un angle avec la poignée (50),
dans lequel l'emplacement des éléments d'engagement d'attaches (52), chacun en dessous d'une extrémité respective de la pluralité d'attaches de fixation de couvercle (32) et l'emplacement d'une base de chaque élément d'engagement d'attache (52) sur une surface du récipient (11) permettent à la poignée de tourner vers la base (2) du récipient (1) pour désengager la pluralité d'attaches de fixation de couvercle (32) simultanément du récipient à l'aide de l'outil de retrait d'attache.

2. Système selon la revendication 1, dans lequel la nervure (5) comprend une première partie de rebord (12) s'étendant depuis les parois (4) et une deuxième partie de rebord (14) s'étendant vers la base.

3. Système selon la revendication 2, dans lequel la première partie de rebord (12) s'étend substantiellement perpendiculairement aux parois (4), et la deuxième partie de rebord (14) s'étend substantiellement parallèlement aux parois (4).

4. Système selon l'une quelconque des revendications précédentes, dans lequel la hauteur du récipient (1) est supérieure à une largeur du récipient (1).

5. Système selon l'une quelconque des revendications précédentes, dans lequel la nervure (5) est un élément unitaire fixé aux parois (4) du récipient.

6. Système selon l'une quelconque des revendications précédentes, dans lequel les parois (4) entre la nervure (5) et la base (2) sont évasées pour permettre au récipient (1) de s'emboîter avec un récipient (1) similaire.

7. Système selon l'une quelconque des revendications précédentes, dans lequel la nervure (5) inclut une pluralité de toiles de support prévues entre la nervure (5) et les parois (4).

8. Système selon l'une quelconque des revendications 1 à 7, dans lequel le bord (44) est adjacent à une bouche du récipient (1) ou comprend une partie de celle-ci.

9. Système selon l'une quelconque des revendications 1 à 8, dans lequel chacune parmi la pluralité d'attaches (32) comprend un corps (34), une extrémité du corps (34) présentant deux branches (36, 38) substantiellement parallèles reliées à celui-ci, une saillie (42) prévue sur l'une des branches (38) pour s'engager avec le couvercle (6), l'autre extrémité du corps (34) présentant une saillie (40) destinée à s'engager avec le bord.
